Europäisches Patentamt

European Patent Office

Office européen des brevets

(19)

(11) **EP 0 738 988 A1**

## (12) DEMANDE DE BREVET EUROPEEN

(43) Date de publication:
**23.10.1996 Bulletin 1996/43**

(51) Int Cl.⁶: **G06T 7/00**

(21) Numéro de dépôt: **96201045.0**

(22) Date de dépôt: **18.04.1996**

(84) Etats contractants désignés:
**DE FR GB NL**

(30) Priorité: **20.04.1995 FR 9504738**

(71) Demandeurs:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB NL**

(72) Inventeur: **Cohen-Solal, Eric,**
**Société Civile S.P.I.D.**
**75008 Paris (FR)**

(74) Mandataire: **Lottin, Claudine**
**Société Civile S.P.I.D.**
**156, Boulevard Haussmann**
**75008 Paris (FR)**

(54) **Procédé et dispositif de traitement d'images pour la détection automatique d'objets dans des images numérisées**

(57) Procédé de traitement d'images pour la détection automatique d'objets d'un type prédéterminé parmi des objets diffus, dans une image d'origine, sous forme de matrice bidimensionnelle de pixels ayant des valeurs d'intensité numérisées, comprenant, sous forme de chaîne de traitement, des étapes incluant : la formation d'une première image transformée (11A, 11B) par un premier lissage (120A, 120B) de l'image d'origine (10A) à la résolution des objets à détecter, dans laquelle est effectuée une détermination (130A, 140A; 130B,140B) d'optima locaux d'intensité (LIST1A, LIST1B) ; la formation d'une seconde image transformée (13A, 13B) par un second lissage (220A, 220B) de l'image d'origine (10A) à la résolution des objets diffus, dans laquelle est effectué une détermination (230A, 230B) de régions homogènes en intensité, un placement (240A, 240B) des optima locaux d'intensité (LIST1A, LIST1B) déterminés à partir de la première image transformée, dans les régions homogènes déterminées à partir de la deuxième image transformée, une sélection (LIST2A, LIST2B) d'un de ces optima par région homogène, et une sélection supplémentaire d'objets, parmi ces optima, constituant la liste (LIST3A, LIST3B) des objets d'un type prédéterminé détectés dans l'image d'origine.
Application : Reconnaissance automatique de régions suspectes dans les images radiologiques

FIG.2F

## Description

## FIELD OF THE INVENTION

L'invention concerne un procédé de traitement d'images pour la détection automatique d'objets d'un type prédéterminé parmi des objets diffus dans une image appelée image d'origine sous forme de matrice bidimensionnelle de pixels ayant des valeurs d'intensité numérisées.

L'invention concerne également un dispositif pour mettre en oeuvre ce procédé.

L'invention trouve particulièrement son application dans le domaine de la radiologie, pour la reconnaissance automatique d'opacités suspectes d'un type prédéterminé dans les mammographies, correspondant à des cancers potentiels spécifiques.

## BACKGROUND OF THE INVENTION

Il est déjà connu de l'état de la technique, une méthode de traitement d'image intitulée "Multirésolution Analysis of Ridges and Valleys in Grey-Scale Images" publiée par S.M. GAUCH, et S.M. PIZER, dans IEEE TRANSACTIONS ON PATTERNS ANALYSIS AND MACHINE INTELLIGENCE, Vol.15, N°6, June 1993. Cette publication décrit particulièrement une méthode de détection des crêtes et des vallées, dans une image en trois dimensions, par la recherche des lignes de partage des eaux et des points les plus bas des bassins récepteurs des eaux de ruissellement sur les pentes depuis les crêtes. Ce concept géographique est appliqué aux images en deux dimensions, dans lesquelles on introduit les niveaux d'intensité des pixels, ou niveaux de gris comme troisième dimension. Selon la méthode décrite, les bassins (en anglais watershed regions) et leurs frontières (en anglais boundaries) sont calculées pour chaque image. Puis, une hiérarchie est imposée sur ces régions, en suivant les extrema d'intensité définissant chaque bassin à travers des résolutions multiples. Ensuite cette hiérarchie est utilisée pour associer une échelle d'élimination avec chaque segment de courbe de frontière de bassin. Enfin, une hiérarchie de résolution est définie sur les frontières des bassins.

La présente invention se propose de fournir une méthode et un dispositif pour détecter, de manière automatique, dans des images radiologiques numérisées, et notamment dans des images mammographiques, des opacités suspectes.

La présente invention se propose tout particulièrement de fournir une telle méthode et un tel dispositif pour effectuer cette détection automatique dans une image unique, ou bien image par image séparément, sans tenir compte d'une base de données préalablement établie.

Un but particulier de l'invention est de fournir une telle méthode et un tel dispositif pour détecter de manière automatique des opacités suspectes de très faibles dimensions, de l'ordre de 4 à 5 mm de diamètre.

Un autre but particulier de l'invention est de fournir un tel dispositif de détection automatique de ces zones, qui soit associé à l'équipement spécial de radiologie approprié à la réalisation de mammographies.

Le traitement des images mammographiques pour la détection automatique des opacités suspectes pose un grand nombre de problèmes.

Ces problèmes tiennent essentiellement à la variabilité des objets présents dans les images à traiter. La variabilité des objets à traiter est due, d'une part, à l'aspect diffus des tissus qui constituent la majeure partie de l'organe radiographié ; et d'autre part, au fait que la mammographie est la projection d'une image en trois dimensions d'un organe d'épaisseur non constante ; ces opacités variables d'origines diverses peuvent masquer des opacités suspectes, de forme également variable et de faible diamètre, que l'on cherche précisément à détecter.

En conséquence, une méthode de détection d'opacités suspectes dans une mammographie doit prendre en compte toutes les informations contenues dans l'image, ne peut se permettre d'extraire a priori des objets, et doit être particulièrement robuste.

Un but de l'invention est de fournir une méthode de détection automatique et à partir d'une seule prise de vue de la totalité des véritables zones suspectes, et en excluant le maximum de zones détectées à tort.

Ce but est atteint par un procédé de traitement d'images pour la détection automatique d'objets d'un type prédéterminé parmi des objets diffus, dans une image, appelée image d'origine, sous forme de matrice bidimensionnelle de pixels ayant des valeurs d'intensité numérisées, ce procédé comprenant, sous forme de chaîne de traitement, des étapes incluant :

un premier lissage de l'image d'origine à la résolution des objets à détecter, pour fournir une première image transformée,
une détermination d'optima locaux d'intensité à partir de ladite première image transformée,
un second lissage de l'image d'origine à la résolution des objets diffus, pour fournir une seconde image transformée,
une détermination de régions homogènes en intensité à partir de la seconde image transformée,
un placement des optima locaux d'intensité déterminés à partir de la première image transformée, dans les régions homogènes déterminées à partir de la deuxième image transformée, et une sélection d'un de ces optima par région homogène,
la formation d'une liste d'objets, parmi les optima d'intensité sélectionnés, constituant une liste des objets d'un type prédéterminé détectés dans l'image d'origine.

Un dispositif d'aide à la visualisation d'images médicales comprend :
un système pour fournir des données d'une image médicale d'une partie du corps humain, sous forme de matrice bidimensionnelle de pixels ayant des valeurs d'intensité numérisées,
un système d'affichage de l'image,
et un système de traitement incluant un processeur ayant accès aux données d'image et au système d'affichage pour mettre en oeuvre un procédé de traitement d'images pour la détection automatique d'objets d'un type prédéterminé parmi des objets diffus, dans ladite image, appelée image d'origine, sous forme de matrice bidimensionnelle de pixels ayant des valeurs d'intensité numérisées,

ce procédé comprenant, sous forme de chaîne de traitement, des étapes incluant :

un premier lissage de l'image d'origine à la résolution des objets à détecter, pour fournir une première image transformée,
une détermination d'optima locaux d'intensité à partir de ladite première image transformée,
un second lissage de l'image d'origine à la résolution des objets diffus, pour fournir une seconde image transformée,
une détermination de régions homogènes en intensité à partir de la seconde image transformée,
un placement des optima locaux d'intensité déterminés à partir de la première image transformée, dans les régions homogènes déterminées à partir de la deuxième image transformée, et une sélection d'un de ces optima par région homogène,
la formation d'une liste d'objets, parmi les optima d'intensité sélectionnés, constituant une liste des objets d'un type prédéterminé détectés dans l'image d'origine.

## BRIEF DESCRIPTION OF THE DRAWINGS

L'invention est décrite ci-après en détail en référence avec les figures schématiques dont :

- la FIG.1A qui est un diagramme du PREMIER CYCLE d'étapes du procédé ;
- la FIG.1B qui est un diagramme du SECOND CYCLE d'étapes du procédé ;
- les FIG.2A à 2F qui représentent les images d'intensité obtenues à différentes étapes du procédé dans la CHAINE A ;
- la FIG.3A qui montre une ligne de démarcation entre sein périphérique et sein profond ;
- les FIG.3B à 3F qui représentent les images d'intensité obtenues à différentes étapes du procédé dans la CHAINE B ;
- la FIG.4A qui est une diagramme général du procédé ;
- la FIG.4B qui est un diagramme général du procédé montrant les différents CYCLES et les CHAINE A ET CHAINE B.
- les FIG.5 qui illustrent l'étape de construction d'une ligne de démarcation entre sein périphérique et sein profond : la FIG.5A qui représente l'intensité I le long d'un axe AA' coupant une image d'origine 10A, comme montré sur la FIG.3B ; la FIG.5B qui est un histogramme d'une image d'origine 2A ; la FIG.5C qui est un diagramme des sous-étapes de construction de la ligne de démarcation ; la FIG.5D qui illustre une sous-opération de moyennage ;

- la FIG.6 qui illustre les résultats obtenus par le procédé par des courbes montrant les vraies alarmes TA en fonction des fausses alarmes FA ;
- les FIG.7A à 7F qui illustrent les réponses en intensités IR, en fonction de distances en pixels sur l'image traitée, ces distances étant comptées sur deux axes rectangulaires X, Y ;
- la FIG.8 qui montre schématiquement un dispositif de prise de vue et de traitement d'images de rayons X, incluant un microprocesseur en relation avec un poste d'ordinateur pour traiter des données d'image selon le présent procédé.

## DESCRIPTION OF THE PREFERRED EMBODIMENTS

## LE PROCEDE

Le procédé de traitement d'images décrit ci-après concerne la détection automatique d'opacités suspectes dans une image mammographique numérisée, dans le but de constituer une aide au diagnostic du praticien, sans utiliser une banque de données, avec les seules données de l'image examinée.

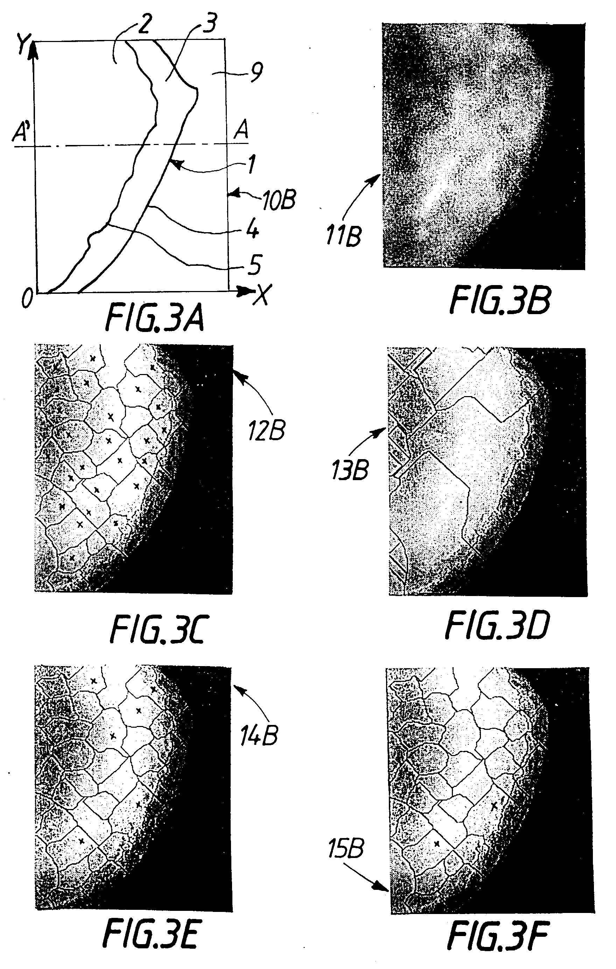

La FIG.2A représente un exemple d'une telle image mammographique originale 10A sous forme d'une image d'intensités. La FIG.3A représente une image mammographique de manière schématique en 10B.

L'image mammographique numérisée 10A peut contenir 1024 x 1024 pixels par exemple, codés sur 16 bits. Dans ce codage, 12 bits sont utilisés pour coder les pixels en intensité. L'acquisition des images mammographique peut être faite de façon numérique, mais dans tous les cas, l'invention ne tient pas compte de la méthode par laquelle l'image numérique a été obtenue.

Dans la détection des opacités suspectes, un certain nombre de difficultés liées à l'image mammographique doivent être prises en compte. Ces difficultés sont de plusieurs ordres :

- l'organe sein 1 est radiographié de profil et ne présente pas une épaisseur constante. En référence avec la représentation schématique 10B de la FIG. 3A, il présente deux zones : l'une appelée "sein profond 2" a l'épaisseur la plus constante, parce que le praticien effectue la prise de vue en pressant l'organe entre deux plaques pour obtenir une "lame de tissus" à faces aussi parallèles que possible ; l'autre zone appelée "sein périphérique 3" a une épaisseur qui décroît rapidement parce qu'elle correspond à la partie de la "lame de tissus" située entre le sein profond 2 et l'air,

- l'organe sein 1 se présente sur l'image d'intensités 10A de la FIG.2A comme la zone ayant de nombreux niveaux de gris qui ressort sur le champ 9 noir complètement dénué d'informations entourant le sein, où les rayons X sont transmis directement au système d'acquisition d'image. La peau 4 constitue l'interface entre le sein 1 et le champ noir 9,

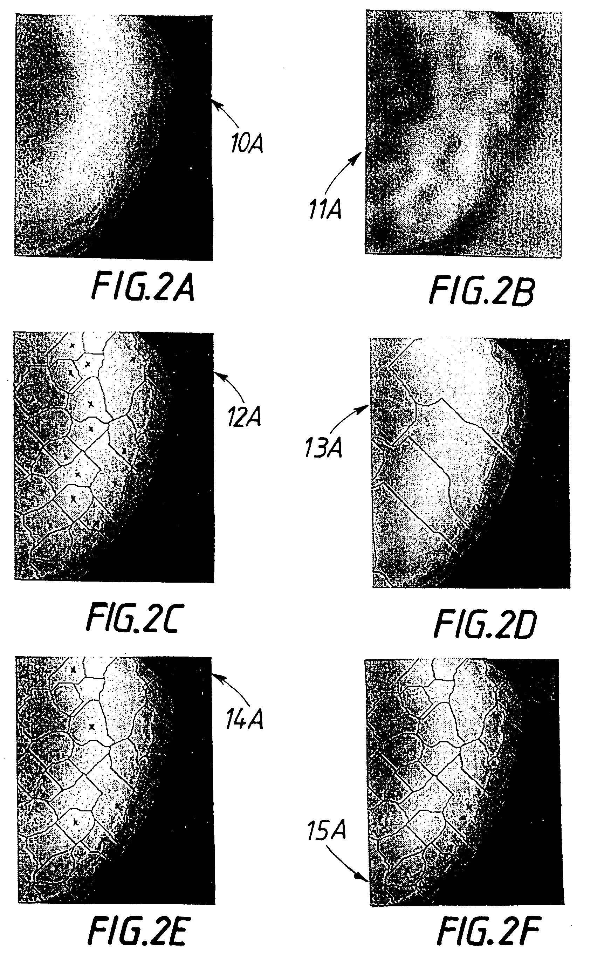

- les objets à détecter, par exemple repérés par des croix dans les FIG.2F et 3F, sont des opacités résultant de l'existence de groupes compacts de cellules biologiques agglomérées. Ces opacités se présentent donc comme des régions claires ou blanchâtres sur un fond constitué des autres objets du sein 1 radiographié. Ces opacités ont des localisations essentiellement variables dans le sein 1, et peuvent se trouver en tout endroit aussi bien du sein profond 2 que du sein périphérique 3. Ces opacités ont en outre elles-mêmes des formes essentiellement variables : leurs formes varient d'une patiente à l'autre, et pour une même patiente leurs formes varient d'une période à une autre. D'une manière générale ces formes ne sont ni prévisibles ni répétitives. Ces opacités se distinguent par une forme plus floue, d'autres anomalies suspectes qui peuvent apparaître sur la mammographie, et qui sont appelées microcalcifications,

- le fond, sur lequel ces opacités suspectes sont à détecter, est constitué également d'opacités plus ou moins claires ou blanchâtres, résultant de la texture ordinaire de l'organe sein 1. Cette texture ordinaire comprend des fibres, des amas graisseux et des vaisseaux. Ces objets formant le fond ont également des formes et des localisations ainsi que des intensités essentiellement variables,

- les objets du fond peuvent occulter facilement les opacités suspectes. En effet, par principe, la prise de vue radiographique intègre les informations contenues dans les tissus superposés situés dans la "lame des tissus". Les amas graisseux ont souvent des formes et des intensités qui peuvent induire en erreur dans la détection des opacités suspectes,

- les opacités suspectes à détecter sont des cancers potentiels. Le procédé doit donc prendre en compte toutes les informations de l'image, d'abord parce que les opacités suspectes sont grandement interdépendantes des objets fonds, et ensuite parce qu'aucune possibilité ne doit être laissée de côté a priori, un des buts du procédé étant la détection de tous les cancers potentiels,

- l'interdépendance des objets dans le mammogramme implique que le procédé ne peut inclure d'étapes d'extraction au sens où on l'entend dans le domaine du traitement d'images,

- le procédé a pour but d'être autosuffisant, et donc prend en compte toutes les informations contenues dans une image particulière à étudier et non pas des informations contenues en outre dans une base de données,

- le procédé cherche à détecter des opacités de diamètre 4 à 5 mm correspondant à des cancers débutants, non palpables, non visibles aux ultrasons.

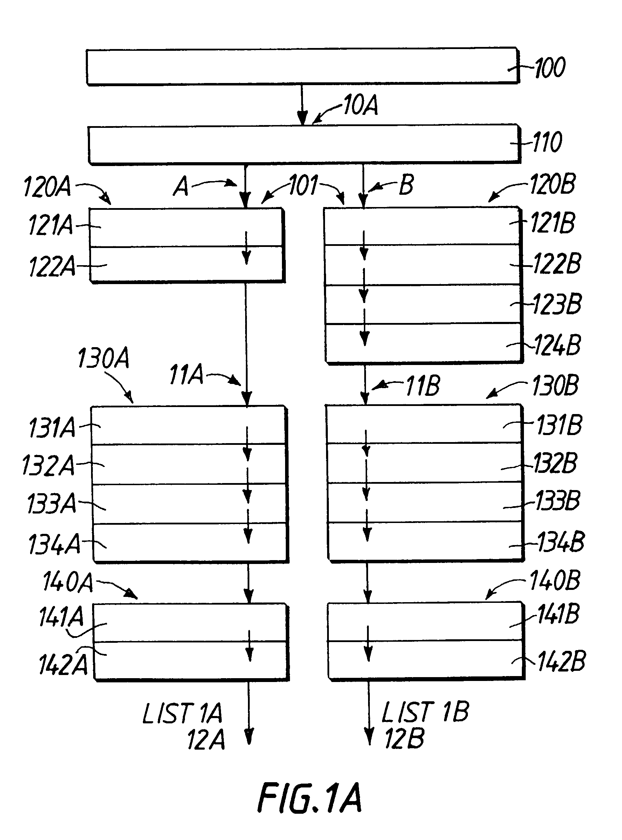

L'invention propose un procédé de traitement d'images numériques dont les différentes étapes sont illustrées sous forme de blocs fonctionnels par les diagrammes des FIG.1A, 1B, FIG.4A, FIG.4B et FIG.5C.

En référence avec la FIG.1A, ce procédé comprend :

- en 100, l'acquisition sous forme numérique d'une image d'intensité appelée image d'origine 10A, comme montré sur la FIG.2A ;

- en 110, le tracé d'une ligne de démarcation séparant le sein profond 2, du sein périphérique 3, comme montré sur l'image 10B schématique de la FIG. 3A,

- puis une chaîne d'étapes, qui peut prendre deux formes notées respectivement chaîne A et chaîne B, qui peut être menée à bien dans l'une ou l'autre de ses formes A ou B, ou bien de préférence, qui peut être menée à bien en mettant en oeuvre les deux formes A et B en parallèle.

Chacune des formes A et B de la chaîne comprend respectivement d'abord un premier cycle 101 incluant en référence avec la FIG.1A, et avec les FIG.2 pour la chaîne A et FIG.3 pour la chaîne B :

- une première transformation 120A, 120B appliquée à l'image d'origine 10A, qui effectue un premier lissage à la résolution des objets à détecter, pour fournir une image appelée première image transformée 11A, 11B ; cette première transformation est effectuée par exemple au moyen d'un opérateur ayant un noyau de dimension de l'ordre de la dimension des objets à détecter;

- une première détection 130A, 130B des éléments essentiels de l'image à partir de la première image transformée 11A, 11B, éléments essentiels qui sont :

  . la position des maxima d'intensité locaux dans la première image transformée 11A, 11B,
  . l'étendue, en nombre de pixels, des bassins-versants ayant donné lieu à ces maxima locaux respectivement,
  . la position des frontières entre ces différents bassins versants,

- un premier test 140A, 140B pour éliminer des éléments non pertinents détectés parmi les éléments essentiels, qui fournit en sortie une première liste d'éléments clés relative à la chaîne A, notée LIST1A, et/ou une première liste d'éléments clés relative à la chaîne B, notée LIST1B, chacune de ces listes comprenant respectivement :

.   l'étendue des bassins-versants clés retenus,
.   la position des maxima clés correspondants,
.   les frontières des bassins-versants correspondantes.

A ce stade, chacune des chaînes fournit en outre une image 12A, 12B respectivement, constituée par l'image d'origine 10A, dans chacune des chaînes A, B, sur laquelle les informations relatives à la première liste correspondante LIST1A, LIST1B sont superposées, de manière à rendre ces éléments visibles. Par exemple, les maxima clés sont repérés par des croix, et les frontières sont représentées par des lignes.

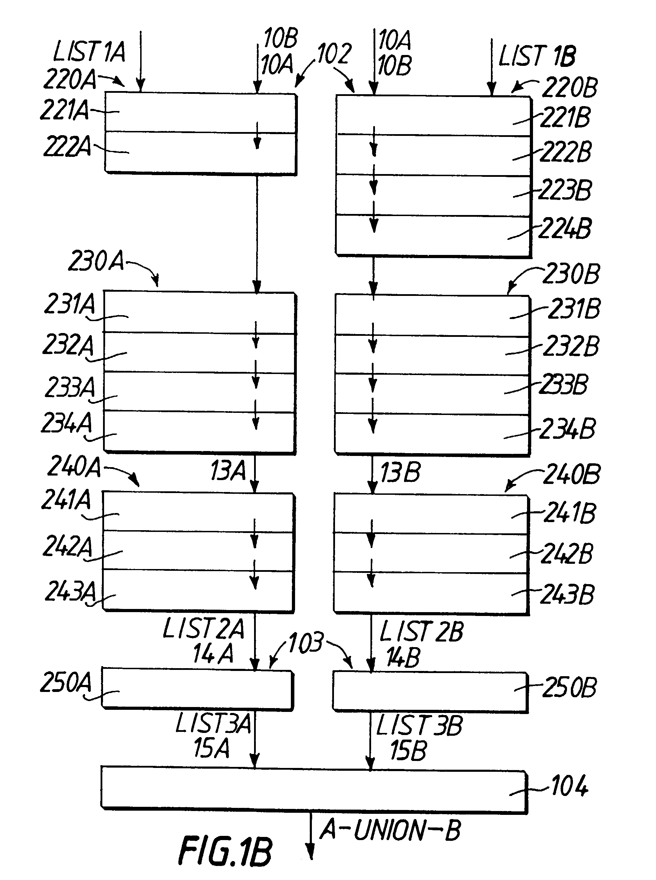

Le procédé se poursuit sur chacune des deux chaînes A et B respectivement par un second cycle 102 d'étapes incluant, en référence avec la FIG.1B :

-   une seconde transformation 220A, 220B appliquée à l'image d'origine 10A, dans chacune des chaînes, qui effectue un second lissage à la résolution des tissus, pour fournir une image appelée seconde image transformée 13A, 13B; cette seconde transformation peut être effectuée au moyen d'un opérateur ayant un noyau de dimension au moins de l'ordre du double de celle des objets à détecter;

-   une seconde détection 230A, 230B des éléments essentiels de la seconde image transformée, qui fournit :

.   la position de nouveaux maxima d'intensité locaux dans cette seconde image transformée 13A, 13B,
.   l'étendue en nombre de pixels des bassins versants ayant donné lieu à ces nouveaux maxima locaux,
.   la position des nouvelles frontières délimitant ces nouveaux bassins versants, montrées sur cette seconde image transformée 13A, 13B,

-   une opération 240A, 240B de comparaison des maxima clés d'intensité, effectuée de façon locale et incluant :

.   une prise en compte des éléments des premières listes LIST1A et/ou LIST1B formées dans le premier cycle 101, pour placer les maxima clés, déterminés dans le premier cycle 101 et fournis par ces premières listes, dans les nouveaux bassins versants trouvés dans le second cycle 102,
.   une comparaison des intensités de ces maxima clés effectuée à l'intérieur de chaque nouveau bassin-versant appelé région homogène,
.   une sélection, dans chaque région homogène formée par un nouveau bassin-versant trouvé dans le second cycle 102, d'un maxima clé trouvé dans le premier cycle 101 comme celui ayant l'intensité la plus grande, noté meilleur maximum clé.

Ces opérations de comparaison locale des maxima clés d'intensité et de sélection d'un meilleur maximum clé par région homogène fournissent une modification des premières listes LIST1A et/ou LIST1B pour former des deuxièmes listes correspondantes LIST2A et/ou LIST2B comprenant :

.   la localisation des meilleurs maxima clés sélectionnés dans ce deuxième cycle, mais issus des premières listes,
.   l'étendue des bassins-versants correspondants issue des premières listes,
.   la position des frontières correspondantes, également issue des premières listes.

Ces informations sont reportées sur l'image d'origine pour fournir les images 14A, 14B des FIG.2E et 3E. En outre dans chaque liste, les meilleurs maxima clés sont classés par ordre d'intensités décroissantes.

A partir de chaque deuxième liste LIST2A et/ou LIST2B, le procédé comprend une étape 103, réalisée dans chacune des chaînes A et B en 250A, 250B, où l'opérateur peut sélectionner parmi les meilleurs maxima clés, un certain nombre "d'alarmes" ou opacités suspectes également classées en fonction de leur importance probable. On dispose à ce stade du procédé, soit d'une troisième liste correspondant à celle des chaînes A ou B que l'on a choisie de mettre en oeuvre, soit de deux troisièmes listes dans le cas où on met en oeuvre les deux chaînes A et B en parallèle, chaque troisième liste étant formée de la position des maxima d'intensité correspondant à ces alarmes retenues par l'opérateur. Chaque chaîne A, B fournit en outre une image d'intensité 15A, 15B, constituée par l'image d'origine 10A sur laquelle les informations relatives aux troisièmes listes et constituées par les alarmes retenues et les frontières correspondantes des bassins-versants de la première liste sont respectivement superposées de manière visible.

Selon l'invention, à partir des deux troisièmes listes, LIST3A et LIST3B, dans le cas préférentiel où l'on a mis en oeuvre les deux chaînes A et B en parallèle, on réalise dans l'étape 104 une liste supplémentaire notée A-UNION-B qui comprend l'union des "alarmes" retenues des listes LIST3A et LIST3B.

Ainsi l'opérateur dispose d'une quatrième liste, A-UNION-B, dans laquelle les alarmes ou opacités suspectes sont classées en fonction de leur réponse en intensité et donc de la probabilité qu'elles constituent de vraies alarmes de cancers potentiels.

Les différentes étapes du procédé, et leurs sous-étapes sont décrites ci-après en détail.

## I METHODE DE DETERMINATION D'UNE LIGNE DE DEMARCATION ENTRE LE SEIN PROFOND ET PERIPHERIQUE (110)

Dans le but de mieux prendre en compte les difficultés liées à la variabilité de l'image, le présent procédé permet de traiter distinctement la région de sein profond 2, de la région de sein périphérique 3, en générant une ligne frontière 5 entre ces deux régions par la méthode suivante 110.

Cette ligne frontière 5 est générée à partir des données de l'image d'origine 10A, et est représentée schématiquement sur l'image 10B de la FIG.3A.

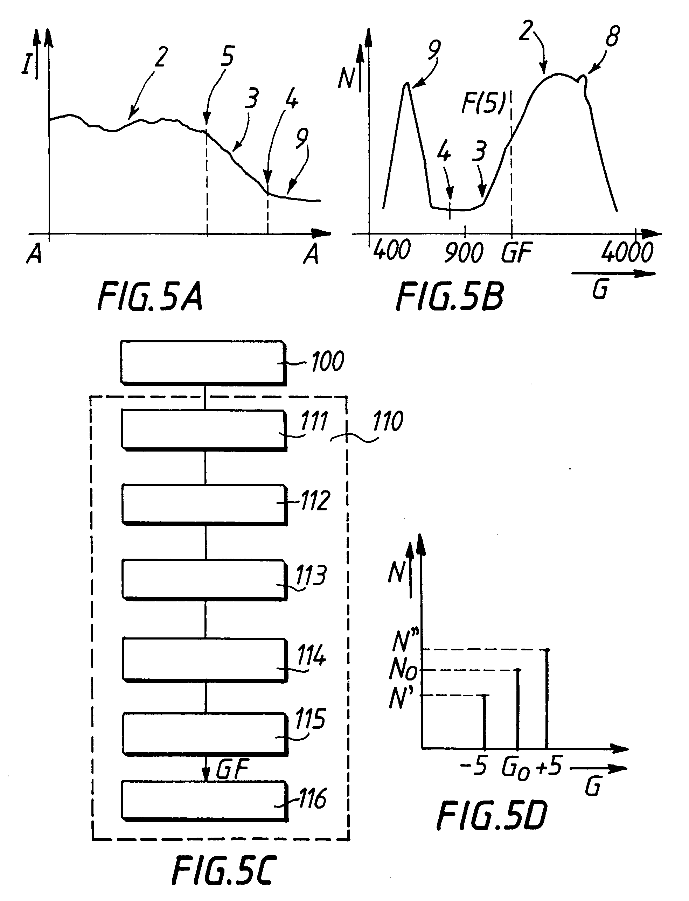

Comme on l'a dit précédemment, en référence avec la FIG.3A, l'organe sein dans les conditions de prise de vue de profil, entre des plaques, est plus épais dans sa partie sein profond 2 que dans sa partie sein périphérique 3. Dans la FIG.3A, le sein profond est représenté à gauche en 2. En allant de la gauche vers la droite de cette FIG. suivant l'axe A'A, on trouve successivement le sein profond 2, le sein périphérique 3, la peau 4, et le champ 9 sans information. La FIG.5A représente une courbe des intensités I trouvées le long de la coupe A'A de la FIG.3A. On trouve d'abord en partant de A' une intensité I (ou niveau de gris) moyennement élevée et stable correspondant au sein profond 2, puis l'intensité I diminue rapidement en correspondance avec le sein périphérique 3 pour arriver ensuite, vers A, dans le champ 9 d'intensité régulièrement basse. La région 2 est la plus blanche et donc montre l'intensité I la plus forte dans l'image d'origine 10A de la FIG.2A parce que son épaisseur plus grande transmet une intensité de rayons X moins grande que la région 3 périphérique d'épaisseur moindre. D'une manière générale, plus l'épaisseur de tissus traversée par les rayons X est grande, moins ces tissus sont transparents, donc plus l'intensité des rayons X transmis est faible, et plus la région correspondante de la mammographie est blanchâtre.

On considère l'image d'origine 10A, formée de pixels ayant chacun un niveau d'intensité dans l'échelle des niveaux d'intensité définis plus haut. Il apparaît qu'à chaque niveau d'intensité G correspond un certain nombre N de pixels de l'image.

On construit donc, à partir de cette image, un histogramme tel que représenté sur la FIG.5B, où les niveaux d'intensité G sont représentés en abscisse, par exemple du niveau d'intensité 400, au niveau d'intensité 4000 environ ; et où le nombre de pixels N correspondant à chaque niveau d'intensité G est représenté en ordonnée.

Cet histogramme revèle une région correspondant au champ 9 de la FIG.3A, une région de sein profond 2, et une région de sein périphérique 3.

La région de champ 9 forme un pic sur l'histogramme aux alentours du niveau d'intensité 500, parce que le champ 9 contient de très nombreux pixels ayant tous pratiquement la même intensité I faible.

La région de sein périphérique 3 forme, de part et d'autre du niveau de gris 900, un plateau qui amorce une faible pente en allant vers les niveaux d'intensité plus élevés, parce que, dans la région du sein périphérique 3, qui est petite en surface sur la mammographie, il existe peu de pixels correspondant à un même niveau d'intensité, et que dans l'ensemble, les niveaux d'intensité de cette région périphérique 3 sont faibles, parce que l'épaisseur traversée en 3 est faible et donc assez transparente aux rayons X. Les niveaux d'intensité de cette région périphérique 3 sont cependant moins faibles que ceux du champ 9.

La région de sein profond 2 forme un dôme au-delà d'un certain niveau d'intensité GF que l'on cherche à déterminer ; cette région 2 montre des niveaux d'intensité généralement élevés et un grand nombre de pixels par niveaux d'intensité.

La région de sein profond 2 est donc caractérisée par la présence de nombreux pixels par niveau d'intensité ; et la région de sein périphérique 3 par la présence de peu de pixels par niveaux d'intensité.

On choisit pour générer la ligne de démarcation 5 entre le sein profond et le sein périphérique, de déterminer la position du point F de l'histogramme, où la pente de cet histogramme parcouru dans le sens des niveaux d'intensité G croissants, est maximale ; et on calcule le niveau d'intensité GF correspondant.

Il s'avère que la courbe de l'histogramme, dans la région 2 n'est pas lisse et peut comporter un pic 8 qui montre un second maximum de la pente, lequel ne doit cependant pas être pris en compte. La présente méthode prend seulement en compte la position du premier maximum rencontré sur l'histogramme dans le sens des niveaux d'intensité croissants, et en dehors du pic dû au champ 9.

La ligne de démarcation 5 est ensuite construite sur l'image d'origine 10A, comme une ligne d'égale intensité qui joint les pixels ayant l'intensité GF trouvée en ce premier maximum de pente sur l'histogramme.

Sur la FIG.5C, la méthode 110 est représentée sous forme d'un diagramme de blocs fonctionnels. Cette méthode de détermination de la ligne de démarcation 5 comprend :

- en 111, la construction de l'histogramme du nombre de pixels N en fonction des niveaux d'intensité G de l'image d'origine 10A,

- en 112, un lissage de cet histogramme pour diminuer le bruit ; ce lissage peut être réalisé par un filtre moyenneur, de taille 11 pixels par exemple, qui calcule sur la courbe d'histogramme le nombre de pixels à attribuer à un niveau d'intensité $G_O$ donné sur l'axe G des niveaux d'intensité ; en référence avec la FIG.5D, dans l'exemple cité, ce filtre effectue la moyenne entre le nombre N' de pixels à $G_O$-5, le nombre N" de pixels à $G_O$+5 et le nombre $N_O$ des pixels à $G_O$,

- en 113, la construction d'une image gradient de l'histogramme, en effectuant le calcul de la dérivée de la fonction histogramme au moyen d'un filtre gradient qui est un opérateur évaluant la différence du nombre de pixels relatifs aux niveaux d'intensité consécutifs pris deux à deux,

- en 114, la détermination des gradients les plus grands par un premier test appliqué à l'image gradient précédente, pour déterminer les maxima de pente de l'histogramme,

- en 115, la sélection du maximum F recherché, parmi les maxima déterminés précédemment en 114, en utilisant par exemple le second test suivant : la valeur du maximum de pente est gardée si le niveau d'intensité GF correspond à une valeur de la somme cumulée du nombre des pixels $\Sigma(N)$, entre G = 400 et GF, qui est inférieure à 50 % de la somme cumulée totale du nombre des pixels $\Sigma(N)$ entre, dans notre exemple le niveau d'intensité G = 400 et le niveau d'intensité G = 4000. Ce test permet de sélectionner le premier maximum en F sur la FIG. 5B,

- en 116, la construction d'une ligne 5 reliant des pixels voisins dans l'image d'origine 10A, ayant le niveau d'intensité GF dans cette image, comme montré schématiquement sur l'image 10B de la FIG.3A. Selon les conventions de la présente méthode, cette ligne 5 sépare la région de sein profond 2, de la région de sein périphérique 3.

A la suite de l'étape 100 d'acquisition de l'image numérisée, et de l'étape 110 de génération de la ligne de démarcation 5, le présent procédé comprend donc au moins une chaîne et de préférence deux chaînes d'étapes respectivement A et B traitant en parallèle l'image d'origine 10A de la FIG.2A, munie des informations représentées sur l'image 10B de la FIG.3A.

## II/ PREMIERE FORME DE LA CHAINE DE TRAITEMENT : CHAINE A

### II-1 Premier cycle de la chaîne A

Ce premier cycle (101) a pur but l'établissement d'une première liste LIST1A, LIST1B d'éléments essentiels clés de l'image, pour révéler les opacités à détecter.

Les différentes étapes du premier cycle 101 du présent procédé sont représentées en détail sous forme de blocs fonctionnels sur le diagramme de la FIG.1A.

### a) Première transformation 120A (121A, 122A) de l'image d'origine

La première chaîne d'étapes du procédé, notée chaîne A, comprend d'abord dans ce premier cycle, une **transformation linéaire** 120A appliquée à l'image d'origine 10A, pour fournir une image transformée, notée première image transformée de la chaîne A, telle que représentée par l'image d'intensité 11A sur la FIG.2B.

Cette transformation linéaire 120A est chargée d'effectuer un lissage de l'image d'origine 10A, à la résolution des objets à détecter, pour faire ressortir les objets à l'échelle des opacités suspectes recherchées.

Cette étape de transformation linéaire 120A, comprend elle-même deux sous-étapes.

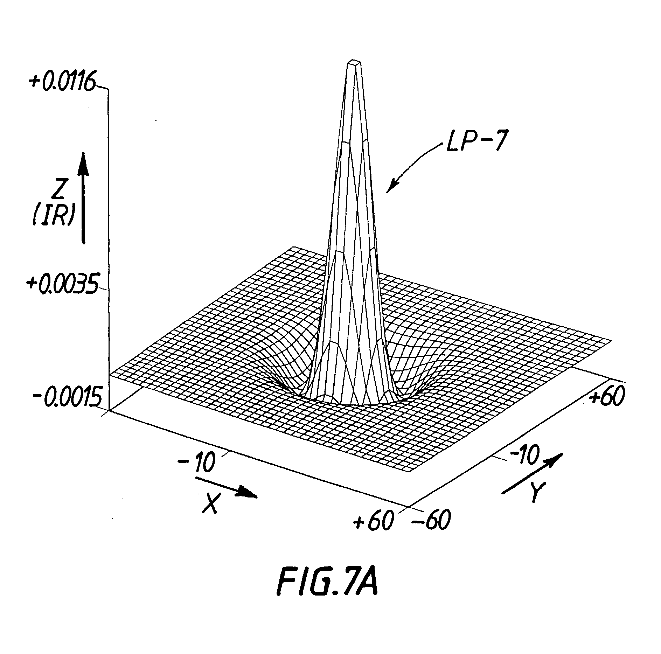

**a1)** un filtrage passe-bande isotrope 121A de l'image d'origine 10A par un filtre Laplacien bidimensionnel récursif, de moyenne résolution, noté LP-7 ; la largeur du noyau du Laplacien est par exemple $\sigma = 7$ pixels ; par largeur $\sigma$ du noyau d'un filtre, en général, on entend la largeur à mi-hauteur du pic d'intensité d'un opérateur Gaussien ou Laplacien par exemple, avec laquelle l'image à traiter est convoluée pour obtenir le résultat du filtrage; un tel pic d'intensité correspond dans le cas du filtrage 121A à la réponse impulsionnelle du filtre LP-7 qui est représentée de manière schématique sur la FIG.7A ; cette FIG.7A montre la réponse en intensité IR selon l'axe des Z, dans un système de coordonnées X, Y, Z ; la distance par rapport au pixel courant positionné en X = o et Y = o, est comptée en pixels sur les axes X, Y parallèles au plan de l'image traitée.

**a2)** une opération d'inversion du signe 121A des intensités des pixels : en effet le résultat de la convolution de l'image d'origine par un filtre à noyau de Laplacien est une image où les zones contenant les opacités recherchées ont un niveau d'intensité inversé par rapport à l'image d'origine. Donc, pour conserver dans tout le cours du procédé de traitement d'image, le même aspect d'"opacités" blanchâtres dans l'image d'intensité, le signe des intensités est inversé après le passage du filtre Laplacien LP-7.

Cette transformation linéaire incluant ce filtre à noyau Laplacien de moyenne résolution fait ressortir les surdensités locales sans distinction d'origine de ces surdensités ; c'est-à-dire que, outre les opacités suspectes, d'autres zones incluant par exemple des fibres superposées ou des vaisseaux, peuvent être mises en valeur.

### b) Détection des éléments essentiels, sur la première image transformée, par une méthode 130A des maxima locaux

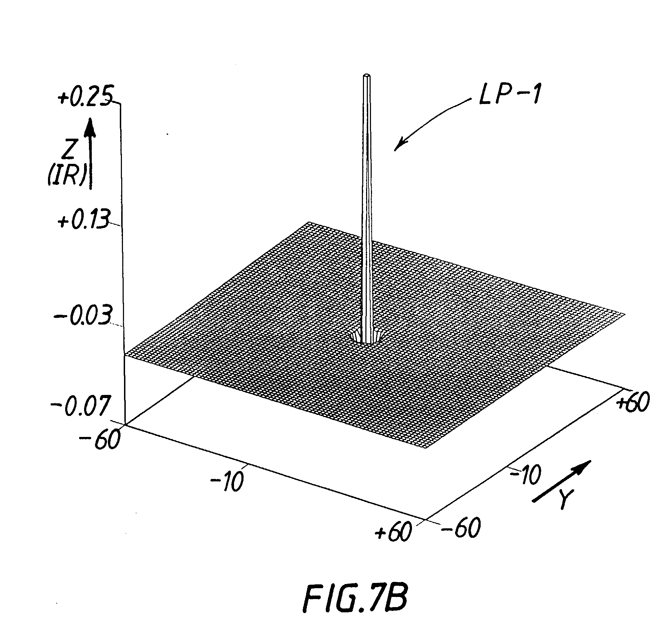

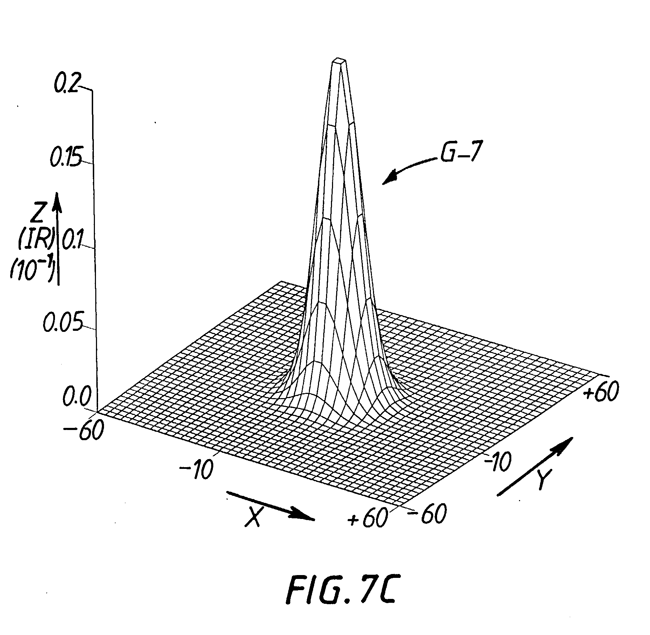

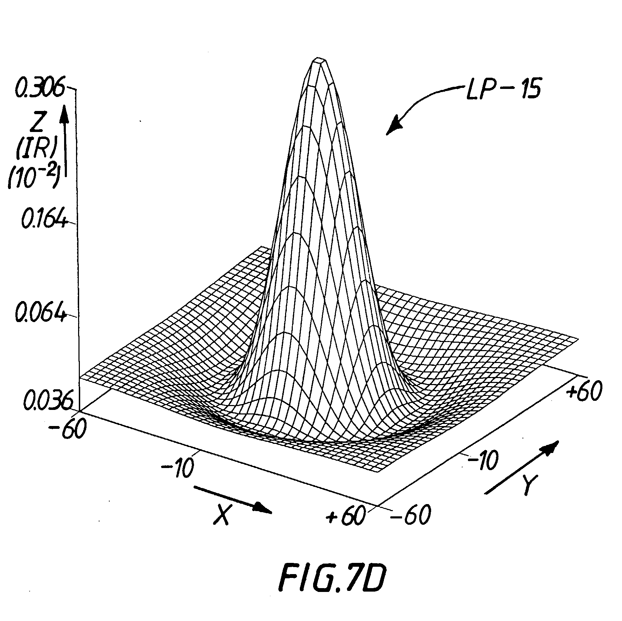

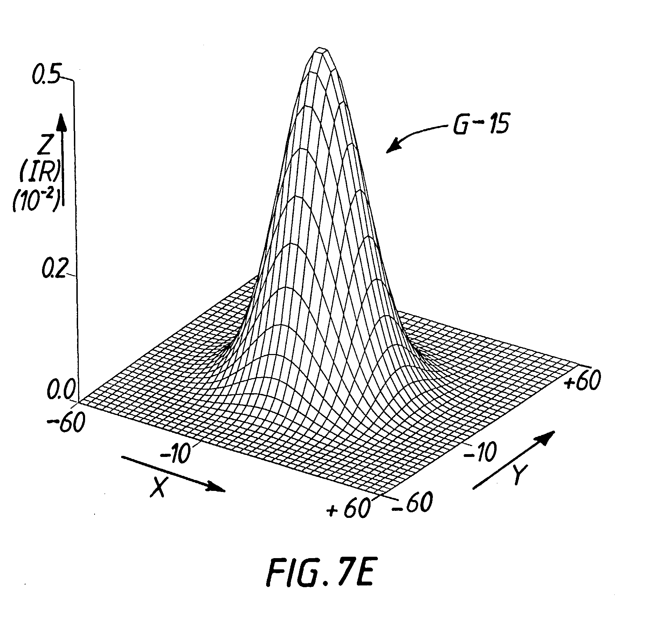

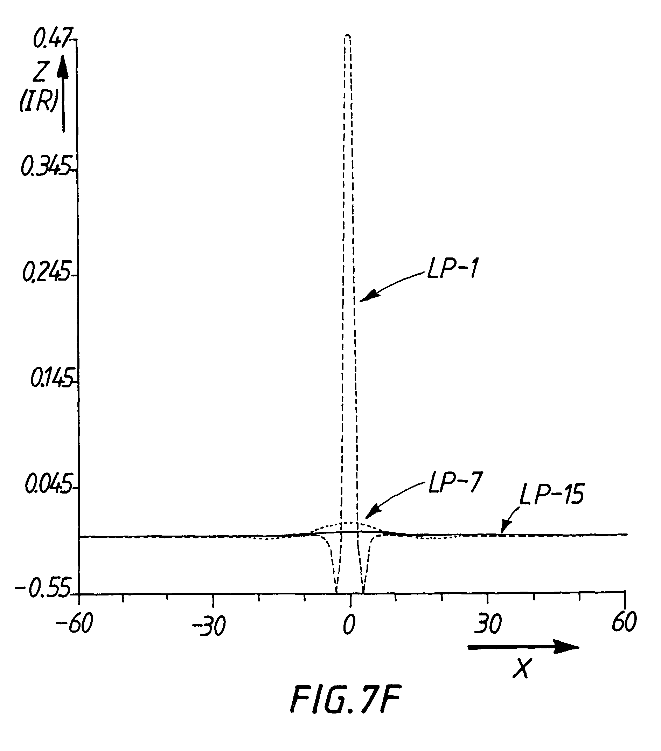

On considère l'image 11A telle qu'issue de la transformation linéaire 120A précédente comme un paysage (en anglais LANDSCAPE), dont deux dimensions appelées horizontales sont mesurées selon les axes de coordonnées X, Y d'un repère matriciel des pixels de cette image 11A et dont la troisième dimension appelée verticale est constituée par l'échelle des niveaux d'intensité Z de chacun des pixels de ladite image 11A. Les axes de coordonnées peuvent être les axes X, Y, Z représentés à titre d'exemple sur l'image schématique 10B, et sur les FIG.7.

L'objet de cette étape est de définir l'image transformée 11A par trois groupes d'éléments essentiels.

A cet effet, on considère que cette image-paysage comprend trois groupes d'éléments géographiques :

- des sommets qui correspondraient en géographie aux points les plus élevés du paysage, par exemple à des pics de montagne,
- des bassins-versants dont les lignes de pente convergent vers des sommets respectifs,
- des frontières entre les différents bassins-versants, qui correspondraient en géographie aux lignes joignant les points les plus bas des vallées ou des cols entre les bassins-versants.

En assimilant les sommets géographiques aux maxima locaux d'intensité, on cherche dans cette étape à détecter :

- les maxima locaux d'intensité,
- les bassins-versants correspondants,
- les frontières entre les bassins-versants.

Ces éléments seront appelés éléments essentiels de la première image transformée. A cet effet, cette étape de détection comprend plusieurs sous-étapes :

**b1)** Calcul de l'image gradient de la première image transformée.

Dans cette sous-étape 131A, les gradients d'intensité sont calculés en chaque pixel de la première image transformée 11A pour déterminer les pentes de l'image-paysage d'intensité. Cette sous-étape 131A fournit une image appelée image gradient. L'image des gradients est obtenue par exemple par un filtrage passe-bande orienté selon l'un et l'autre des axes définis dans la matrice bidimensionnelle de pixels. Ce filtrage est équivalent à appliquer par exemple sur l'image transformée un filtrage gaussien passe-bas suivi du filtrage d'un opérateur différentiel d'ordre 1 orienté selon les axes de la matrice, effectuant comme connu de l'homme du métier, les dérivées partielles d'intensité $\frac{\partial}{\partial x} + \frac{\partial}{\partial y}$.

**b2)** Lâcher de billes 132A sur l'image paysage.

En chaque pixel de l'image paysage 11A, est placée fictivement une bille, et par un déplacement forcé, chaque bille est amenée à suivre VERS LE HAUT la direction de la pente calculée précédemment en ce pixel. Toutes les billes placées fictivement, à raison de 1 par pixel, sont amenées à converger ainsi vers différents sommets respectifs, déterminant de cette manière les premiers éléments essentiels recherchés :

- **les maxima locaux d'intensité** dans l'image-paysage.

**b3)** Comptage des billes, 133A.

Durant l'étape 132A de lâcher des billes sur l'image-paysage, on effectue le comptage 133A du nombre de billes qui convergent vers un même sommet ainsi que la position du pixel de départ de chaque bille. Cette sous-étape 138A fournit de cette manière les seconds éléments essentiels recherchés :

- **l'étendue**, en nombre de pixels, **des bassins-versants** correspondant à chaque sommet ou maximum local d'intensité dans l'image-paysage.

**b4)** Détermination 134A de couples de pixels adjacents participant à des bassins versants différents

Cette sous-étape fournit les troisièmes éléments essentiels de l'image-paysage qui sont :

- **les frontières** entre les différents bassins-versants.

De l'étape précédente 133A, on connaît la localisation d'origine des billes ayant convergé vers un premier sommet, et celle des billes ayant convergé vers un second sommet adjacent. On connaît donc la localisation des pixels correspondants. On détermine en 134A, parmi ces pixels, des **couples de pixels adjacents** dont l'un est origine d'une bille qui a convergé vers le premier sommet, et dont l'autre est origine d'une bille qui a convergé vers le second sommet. On définit la frontière entre les deux bassins-versants adjacents correspondants à ces sommets, comme une ligne qui passe au milieu de ces couples de pixels adjacents.

On répète l'opération jusqu'à avoir des frontières entourant complètement chaque sommet, et comprenant, dans la zone qu'elles délimitent, le nombre de pixels correspondant à l'étendue du bassin-versant correspondant.

Dans un but de simplicité, au lieu de faire passer la frontière entre les pixels adjacents des couples que l'on a déterminés, on fait passer cette frontière par l'un de ces deux pixels.

Ainsi cette méthode des maxima locaux permet de déterminer tous les éléments essentiels de l'image d'une façon simple et rapide.

**c) Sélection d'éléments clés par un test 140A**

Afin de ne pas prendre le risque d'extraire involontairement une petite zone suspecte, le présent procédé par principe ne contient pas d'étapes d'extraction pure telle qu'on le comprend dans le domaine du traitement d'images.

Néanmoins, il a été décidé de ne détecter comme opacités suspectes que les opacités dont le diamètre est supérieur ou égal à 4 mm. Ce choix a été validé sur le plan médical par une équipe de praticiens se fondant sur un grand nombre de cas examinés. Il s'est avéré que dans cette vérification du présent procédé par ces praticiens, 100 % des objets non retenus par le présent procédé, n'étaient pas de vraies alarmes.

Ainsi les éléments essentiels retenus dans le présent procédé seront notés ci-après **"éléments clés"**.

Par principe, ces éléments clés sont retenus, parmi les précédents éléments essentiels sélectionnés, comme ceux qui s'imposent par l'étendue du bassin-versant correspondant.

Donc, on sélectionne comme éléments clés de l'image :

- les bassins-versants d'étendues par exemple > 600 pixels,
- les sommets correspondants,
- les frontières correspondantes.

Ces éléments clés sont mémorisés sous forme de liste appelée LIST1A. Les sommets, ou maxima d'intensité sont classés dans cette liste par ordre d'intensité décroissante.

L'image d'intensité 12A obtenue à l'issue de ce traitement, telle que montrée sur la FIG.2C est formée de l'image d'origine 10A sur laquelle sont superposées de façon visible les informations relatives aux éléments clés :

- les sommets clés sont représentés par des croix : ce sont des maxima d'intensité,
- les bassins versants sont délimités par les frontières représentées par des lignes entourant les croix.

**II.2 Second cycle de la chaîne A**

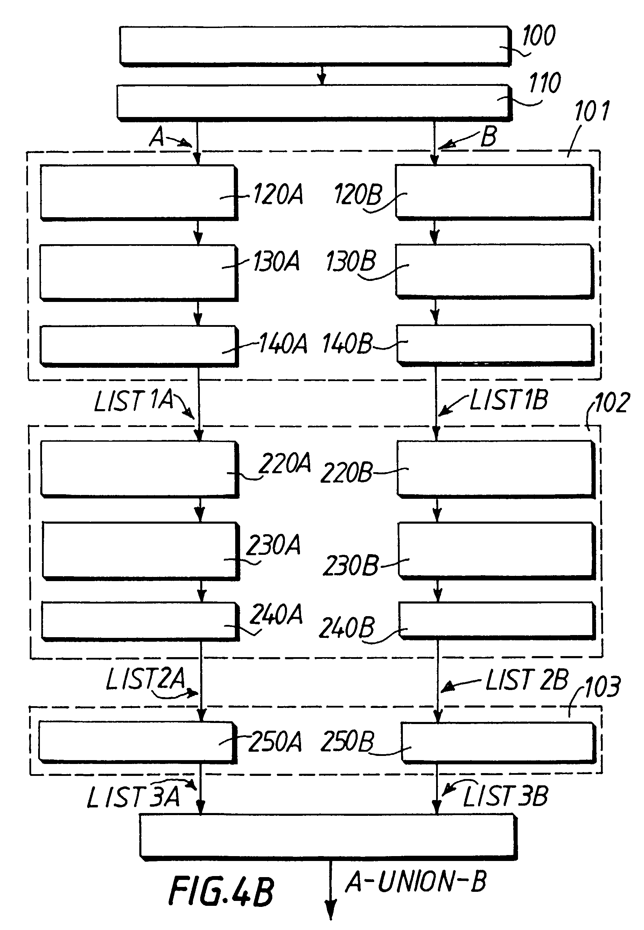

En référence avec les FIG.1B et FIG.4B, ce second cycle a pour but l'établissement d'une seconde liste LIST2A qui contient les meilleurs éléments essentiels notés éléments clés sélectionnés et retenus à travers un second cycle d'étapes décrites ci-après.

Les étapes du second cycle de cette première chaîne A viennent prolonger celles du premier cycle, à l'issue de l'opération de test 140A.

**a) Seconde transformation 220A (221A, 222A)**

Cette seconde transformation 220A est, comme dans le premier cycle, une transformation linéaire. Elle est appliquée à l'image d'origine 10A de la FIG.2A pour effectuer un lissage de cette image 10A, non plus à la résolution des objets mais à la résolution des tissus diffus contenus dans l'organe sein, pour permettre de générer des régions homogènes dans cette image 10A.

Cette étape de transformation linéaire 220A comprend deux sous-étapes 221A, 222A effectuées exactement comme les deux sous-étapes 121A, 122A dans le premier cycle, à ceci près que le filtre Laplacien est référencé LP-15 ; ce filtre a une largeur du noyau $\sigma \simeq$ 15 pixels par exemple. Cette résolution est beaucoup plus faible que la largeur du noyau du Laplacien utilisé dans cette chaîne A au cours du premier cycle, ce qui permet de lisser l'image beaucoup plus, et de faire ainsi apparaître, dans l'image, les régions homogènes recherchées ; la réponse impulsionnelle de ce filtre LP-15 est représentée schématiquement sur la FIG.7D.

**b) Détection des bassins-versants** de l'image produite par cette seconde transformation 220A, par la méthode 230A des maxima locaux.

On applique à l'image lissée résultant de la seconde transformation 220A, exactement la même méthode des maxima locaux décrite précédemment dans le premier cycle de la chaîne A.

Cette méthode fournit :

- des nouveaux sommets, qui ne seront pas pris en compte ultérieurement, qui sont utilisés seulement pour déterminer des nouveaux bassins-versants,
- des nouveaux bassins-versants correspondant à ces nouveaux sommets, qui seront mémorisés, car ces nouveaux bassins-versant constituent, du fait du lissage de l'image à faible résolution, des régions homogènes qui seront utilisées dans une étape ultérieure,
- des nouvelles frontières limitant les nouveaux bassins-versants qui sont représentées par des lignes entourant ces régions homogènes sur l'image 12B de la FIG.2D.

**c) Comparaison locale 240A des maxima clés et sélection des meilleurs maxima clés**

Les maxima clés de la première liste LIST1A sont placés dans les régions homogènes formées par les nouveaux bassins-versants trouvés à l'étape précédente.

Dans chaque région homogène formée par les nouveaux bassins-versants, les maxima clés sont classés par ordre d'intensité décroissante.

Cette comparaison locale des maxima repose sur le principe que la présence d'opacités suspectes réelles considérées localement doit être robuste, du fait de son existence physique dans les tissus diffus.

En réalisant cette comparaison locale des maxima, on tire avantage de pouvoir prendre en compte le fond. En effet, des opacités ayant des aspects semblables dans l'image d'origine ne donnent pas la même réponse au cours du traitement, selon qu'elles ont pour origine une opacité suspecte et un tissu glandulaire.

Il est important de noter que selon le présent procédé chaque NOUVEAU BASSIN VERSANT forme DEUX bassins et non UN, s'il est partagé en deux par la ligne de démarcation 5 déterminée plus haut par la méthode 110. Les maxima clés sont alors replacés dans ces deux bassins-versants déclarés DISTINCTS du fait qu'une partie appartient au sein périphérique 3 et une autre partie du sein profond 2. Les maxima clés de chacune des deux parties 2 et 3, sont classés distinctement par ordre d'intensité décroissante.

Cette étape 240A permet de former une seconde liste LIST2A de la chaîne A.

Dans chaque nouveau bassin versant, un seul des maxima clés est conservé : on conserve le maxima clé ayant l'intensité la plus grande. On les représente de manière visible par des croix.

On forme ainsi une liste des meilleurs maxima clés, qui constituent la seconde LISTA.

A l'issue de cette étape, on obtient l'image 14A de la FIG.2E formée de l'image d'origine 10A munie, de manière visible, des informations qui viennent d'être déterminées :

- les meilleurs maxima clés de la LIST2A,
- les bassins-versants clés de la liste LIST 1A,
- les frontières clés de la liste LIST 1A,
- la ligne de démarcation 5 entre le sein profond et le sein périphérique.

## SECONDE FORME DE LA CHAINE DE TRAITEMENT : CHAINE B

### III.1 Premier cycle de la chaîne B

#### a) première transformation 120B (121B, 122B, 123B, 124B) de l'image d'origine

La seconde chaîne d'étapes du procédé notée chaîne B comprend aussi dans ce premier cycle une transformation de l'image d'origine 10A, mais maintenant cette transformation 120B est une **transformation non linéaire**. Elle fournit une image transformée notée première image transformée de la chaîne B, telle que représentée par l'image d'intensité 11B de la FIG.3B.

Cette transformation non linéaire 120B est chargée d'effectuer un lissage de l'image d'origine 10A à la résolution des objets à détecter, pour faire ressortir les objets à l'échelle des opacités suspectes à détecter.

L'image d'origine contient, comme on l'a déjà dit, des masses graisseuses, des fibres, des vaisseaux dont la rencontre amène des surdensités locales dues à l'épaisseur et à la non-transparence de ces tissus aux rayons X. Il apparaît que ces trois sortes d'objets ne sont pas aussi bien différenciés qu'il serait souhaitable si on utilise uniquement le filtrage par un Laplacien comme dans la chaîne A du procédé. C'est pourquoi dans cette chaîne B, on effectue une première transformation plus complexe de l'image d'origine. Cette première transformation comprend les sous-étapes suivantes illustrées par le diagramme de la FIG.1A :

**a1)** un filtrage 121B passe-bande isotrope de l'image d'origine 10A par un filtre Laplacien bidimensionnel récursif, à très forte résolution noté LP-1 ; la largeur du noyau du Laplacien est par exemple σ = 1 pixel ; la réponse impulsionnelle du filtre est illustrée schématiquement par la FIG.7B.

Dans cette sous-étape, les filtres et les vaisseaux donnent une réponse forte en amplitude à ce filtre Laplacien, tandis que les objets opacités donnent une réponse de même signe mais beaucoup moins forte. Il existe aussi des zones de l'image qui donne une réponse de signe opposé.

**a2)** Une opération 121B d'inversion du signe des intensités des pixels semblable à l'opération IIA al) effectuée dans la chaîne A.

**a3)** Une opération de test 123B dans laquelle on effectue une mise à zéro de l'intensité des zones dont l'intensité était négative après l'inversion de signe : ce sont les zones qui avaient donné une réponse du signe opposé à celui de la réponse des fibres et opacités. Ces zones mises à zéro constituent maintenant un fond pour les objets à sélectionner.

Seules les parties de l'image montrant une réponse positive sont conservées et parmi elles outre les opacités, les vaisseaux qui montrent une réponse forte en amplitude, mais peu étendue.

**a4)** Un lissage 124B au moyen d'un filtrage passe-bas isotrope par un filtre bidimensionnel récursif à noyau gaussien G7, à une résolution de l'ordre des objets à détecter, par exemple σ = 7. Par cette opération, une moyenne est effectuée entre le fond et les objets ayant une amplitude d'intensité positive. La réponse de ce filtre G7 est représentée schématiquement à titre d'exemple sur la FIG.7C.

Par cette moyenne, du fait que le fond est à zéro, les vaisseaux de faible étendue sont alors atténués, car leur réponse à ce filtrage gaussien est très faible. Par opposition, les objets opacités de grande étendue donnent une forte réponse en amplitude à ce filtrage gaussien et sont maintenant révélés.

L'intérêt d'utiliser, pour réaliser cette transformation de l'image d'origine, dans cette chaîne B, une succession d'opérateurs, formant une transformation non linéaire, au lieu d'un seul opérateur linéaire Laplacien comme dans la chaîne A, est que des objets différents sont révélés.

L'image obtenue par cette transformation non linéaire 120B est une image d'intensité 11B, telle que représentée sur la FIG.3B.

Cette chaîne B se poursuit à partir de cette première image transformée 11B par des opérations 130B et 140B exactement identiques aux opérations 130A et 140A de la chaîne A, décrites précédemment, à ceci près que :

- la sélection des bassins-versants clés dans l'opération 140B se fait par un test sur une étendue plus petite que dans l'opération 140A, par exemple 500 pixels dans cette chaîne B au lieu de 600 pixels dans la chaîne A,
- une liste LIST1B des éléments clés est formée à l'issue de l'opération de test 140B, mais cette liste ne contient pas obligatoirement exactement les mêmes objets que la liste LIST1A issue de l'opération 140A de la chaîne A, du fait que la transformation 120B est différente de la transformation 120A.

Ainsi, l'image obtenue à l'issue de la sélection des éléments clés est l'image 12B de la FIG.3C obtenue à partir de l'image d'origine 10A sur laquelle sont superposées de manière visible les informations relatives aux nouveaux éléments clés :

- des sommets repérés par des croix,
- des bassins-versants entourant les sommets,
- des frontières repérés par des lignes qui peuvent être différents des éléments clés montrés dans l'image 12A sur la FIG.2C.

A ce stade du procédé, les images 12B comprennent encore des éléments trop nombreux pour permettre au praticien de réaliser automatiquement un diagnostic. Parmi ces éléments essentiels, certains sont assurément non pertinents. L'étape suivante du présent procédé permet d'éliminer ces éléments essentiels non pertinents.

**III.2 Second cycle de la chaîne B**

Les étapes de cette deuxième chaîne B du second cycle viennent prolonger celles du premier cycle, à l'issue de l'opération de test 140B.

**a) Seconde transformation 220B (221B, 222B, 223B, 224B)**

Cette seconde transformation 220B est comme la première transformation 120B du premier cycle, une transformation non linéaire. Elle est appliquée à l'image d'origine 10A de la FIG.3B, pour effectuer, comme dans la chaîne A, un lissage de cette image 10A, à la résolution des tissus, pour faire ressortir des régions homogènes dans cette image 10A.

Cette étape de transformation non linéaire comprend quatre sous-étapes 221B, 222B, 223B, 224B effectuées exactement comme les quatre sous-étapes 121B, 122B, 123B, et 124B du premier cycle à ceci près que le filtre gaussien est référencé G15 avec une résolution $\sigma = 15$ pixels. Cette résolution est beaucoup plus faible que la résolution du filtre gaussien utilisé dans le premier cycle, dans le but de mieux lisser l'image et de faire ainsi ressortir des régions homogènes en intensité. La réponse du filtre à noyau Gaussien G15 est représentée schématiquement à titre d'exemple sur la FIG.7E. Il faut noter que la sous-étape 221B, effectuée comme la sous-étape 121B utilise aussi un filtre Laplacien bidimensionnel récursif, à largeur de noyau $\sigma = 1$, dont la réponse impulsionnelle est illustrée schématiquement par la FIG.7B.

La FIG.7F représente a une même échelle, dans le plan des axes X, Z les réponses impulsionnelles des filtres Laplacien utilisés dans le procédé.

Cette FIG.7F montre comment le choix d'un filtre déterminé peut faire ressortir ou bien lisser un élément d'image.

**b) Détection des bassins-versants** de l'image produite par cette seconde transformation 220B, par la méthode des maxima locaux 230B appliquée de la même manière que dans la première chaîne A de ce second cycle.

**c) Comparaison** locale 240B des maxima clés et Sélection des meilleurs maxima clés

Cette opération est menée exactement de la même manière dans cette chaîne B, que dans la chaîne A précédemment décrite.

Cette étape constitue l'étape terminale de la chaîne B et est destinée à former en outre une seconde liste LIST2B de la chaîne B.

Dans chaque bassin-versant, un seul des maxima clés est conservé : on conserve le maximum clé ayant l'intensité la plus grande, représenté par une croix.

On forme ainsi une liste des meilleurs maxima clés qui constituent la seconde liste LIST2B.

A l'issue de cette étape on obtient l'image d'intensité 14B de la FIG.2E, sur laquelle les éléments suivants sont repérés de manière visible :

- les meilleurs maximas clés,
- les bassins-versants clés de LIST1B,
- les frontières clés de LIST1B, représentées par des lignes,
- la ligne de démarcation 5 entre le sein profond et le sein périphérique.

**CHOIX DES ALARMES ET VALIDATION DU PROCEDE**

En référence avec les diagrammes des FIG.1B, 4B et 4B, l'opérateur définit dans l'étape 103, à l'issue de chacune des chaînes A et B, respectivement en 250A et 250B des troisièmes listes LIST3A et LIST3B, contenant chacune un certain nombre des meilleurs maxima clés des LIST2A et LIST2B respectivement. Les LIST3A et LIST3B ne conservent donc que les maxima, appelés "alarmes", qui ont les intensités les plus grandes.

Le nombre d'alarmes gardées est laissé au choix de l'opérateur. Le procédé conserve des alarmes à la fois dans le sein profond et dans le sein périphérique.

Le fait que le procédé rend distinct la recherche de ces alarmes dans les deux parties du sein est très importante, car en aucun cas une région comprenant à la fois une partie de sein profond et une partie de sein périphérique ne peut être considérée comme une région homogène appropriée à la comparaison locale des intensités des maxima.

D'une manière préférentielle, le procédé met en oeuvre les chaînes A et B en parallèle. Dans ce cas, à ce niveau de réalisation des chaînes A et B, le procédé réalise ensuite, dans l'étape 104 l'union des alarmes A-UNION-B comme cité précédemment. Il apparaît clairement en comparant les images d'intensité 15A et 15B, sur lesquelles les alarmes sont rendues visibles par des croix, que la chaîne A et la chaîne B ne détectent pas exactement les mêmes alarmes. Par conséquent, l'union des alarmes réalisées selon le procédé améliore la détection des opacités suspectes et donc la détection des cancers potentiels.

Le procédé a été testé sur 245 mammographies précédemment interprétées par un groupe de praticiens. D'après l'interprétation de ces praticiens, ces mammographies contenaient en tout 256 opacités suspectes contrôlées par biopsies, qui devaient donc être détectées par le présent procédé.

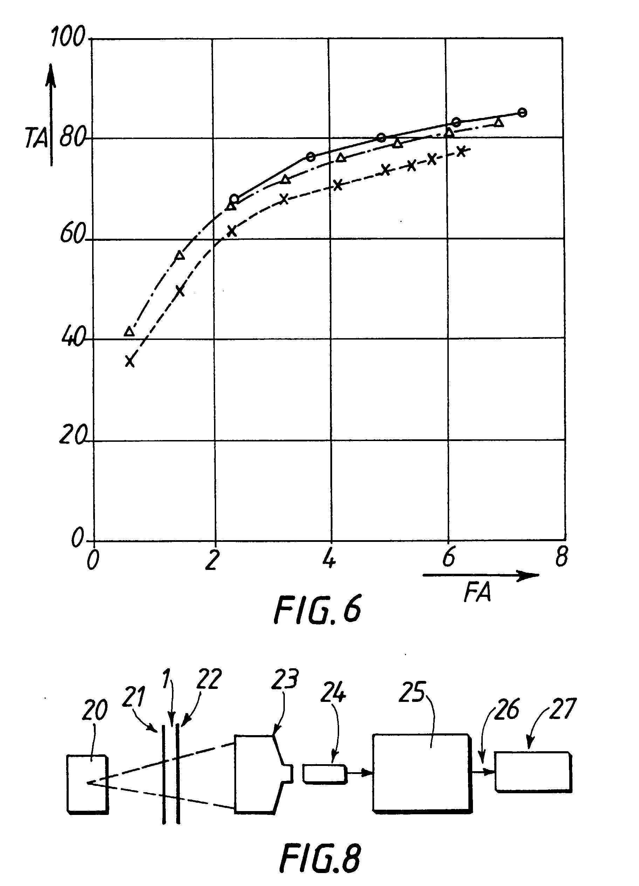

L'examen de ces mammographies a permis d'établir une courbe ROC représentée sur la FIG.6 (de l'anglais Receiver Operating Curve) qui affiche en abscisse le nombre d'alarmes détectées à tort FA (fausses alarmes) et en ordonnée le nombre des vraies alarmes TA bien détectées.

Une courbe ROC idéale serait celle qui montrerait verticalement dès l'origine à 100 % de vraies alarmes, avec 0 % de fausses alarmes. On aurait alors détecté 100 % des cancers, sans aucune erreur.

Le présent procédé automatique permet de s'approcher dans une grande mesure de cet idéal. Sur la courbe ROC de la FIG.6, la ligne en traits pointillés joignant les croix représente le nombre des vraies alarmes TA détectées par rapport aux fausses alarmes FA au moyen de la seule chaîne A (transformations linéaires) ; la ligne en traits pointillés joignant les triangles représente le nombre des vraies alarmes TA détectées par rapport aux fausses alarmes FA au moyen de la seule chaîne B (transformations non linéaires) ; la ligne continue joignant les ronds représente le nombre des vraies alarmes TA détectées par rapport aux fausses alarmes FA au moyen de A-UNION-B.

Notamment, au moyen de A-UNION-B, on a pu détecter :

80 % de vraies alarmes TA (vrais cancers) pour 4 fausses alarmes FA (cancers suspectés à tort), ce qui fait 200 cas résolus de manière automatique sur 245 cas proposés,

70 % de vraies alarmes TA (vrais cancers) pour 2 fausses alarmes FA (cancers suspectés à tort, ce qui fait 180 cas résolus de manière automatique sur 245 cas proposés.

Plus l'opérateur, ou le praticien accepte de prendre en compte de fausses alarmes, plus il se rapproche des 100 % de cas résolus.

Les chaînes A et B du présent procédé ne sont pas seulement des variantes de mise en oeuvre, puisque leur mise en oeuvre en parallèle permet d'obtenir un résultat amélioré.

En effet, en référence avec la courbe ROC de la FIG.6 on trouvé que, par exemple, pour un même nombre 5 de fausses alarmes :

- la chaîne A permet de détecter 76 % de vraies alarmes,
- la chaîne B permet de détecter 83 % de vraies alarmes

et A-UNION-B permet de détecter 86 % de vraies alarmes.

Dans une variante du procédé, au lieu d'appliquer dans le deuxième cycle, les transformations linéaire 220A et non linéaire 220B sur l'image de départ 10A, on peut l'appliquer avantageusement respectivement sur chacune des premières images transformées 11A, 11B obtenues dans le premier cycle.

Le procédé décrit plus haut dans son application au traitement d'images mammographiques peut être appliqué avantageusement à la détection d'objets de type prédéterminé dans toute image numérique représentant des objets diffus. En particulier ce procédé peut être appliqué à des radiographies numérisées, d'autres parties du corps humain ou animal.

## LE DISPOSITIF

En référence avec la FIG.8, un système de radiographie numérisée comprend une source 20 de rayons X ou autre source de rayonnement, des plaques 21, 22 pour presser l'organe sein 1 de la patiente à radiographier, un dispositif intensificateur d'images 23 couplé à un tube vidéo 24 qui fournit des données à un système 25 de traitement numérique d'images relié à un microprocesseur. Ce dernier comprend plusieurs sorties dont une sortie 26 couplée à un moniteur 27 pour la visualisation de l'image radiographique, ou image d'intensité.

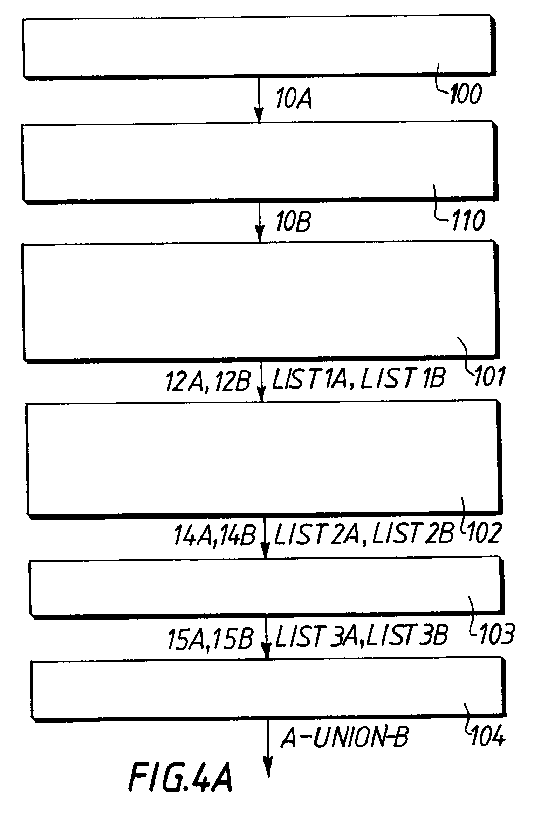

En référence avec les diagrammes des FIG.1A, 4A, 4B, l'image numérique fournie par le système 25 est mémorisée dans des moyens de mémorisation 100, sous forme de données accessibles par le microprocesseur (non représenté). Ce dernier, en relation avec un poste d'ordinateur (non représenté) traite les données mémorisées en 100, selon le présent procédé de traitement d'images décrit plus haut, pour fournir des images d'intensités munies de repères visuels, (des croix pour les maxima d'intensité, et des lignes délimitant les régions suspectes correspondantes), telles que sur les images 15A et 15B des FIG.2F et 3F, et pour fournir les valeurs d'intensités liées aux alarmes repérées, classées par ordre décroissant formant la LISTE A-UNION-B recherchée.

Ces images, formées par l'image d'origine munie des indications visuelles repérant les alarmes et les frontières des bassins versants correspondant, sont affichées par la commande de l'ordinateur par exemple sur un écran, ou peuvent dans un autre exemple être imprimées.

Le dispositif de traitement d'image numérique n'est pas limité au traitement des mammogrammes, mais peut être appliqué au traitement de toute autre image posant des problèmes proches.

## Revendications

1. Procédé de traitement d'images pour la détection automatique d'objets d'un type prédéterminé parmi des objets diffus, dans une image, appelée image d'origine, sous forme de matrice bidimensionnelle de pixels ayant des valeurs d'intensité numérisées, ce procédé comprenant, sous forme de chaîne de traitement, des étapes incluant :

   un premier lissage (120A, 120B) de l'image d'origine (10A) à la résolution des objets à détecter, pour fournir une première image transformée (11A, 11B),
   une détermination (130A, 140A; 130B,140B) d'optima locaux d'intensité (LIST1A, LIST1B) à partir de ladite première image transformée,
   un second lissage (220A, 220B) de l'image d'origine (10A) à la résolution des objets diffus, pour fournir une seconde image transformée (13A, 13B),
   une détermination (230A, 230B) de régions homogènes en intensité à partir de la seconde image transformée,
   un placement (240A, 240B) des optima locaux d'intensité (LIST1A, LIST1B) déterminés à partir de la première image transformée, dans les régions homogènes déterminées à partir de la deuxième image transformée, et une sélection (LIST2A, LIST2B) d'un de ces optima par région homogène,
   la formation d'une liste d'objets, parmi les optima d'intensité sélectionnés, constituant une liste (LIST3A, LIST3B) des objets d'un type prédéterminé détectés dans l'image d'origine.

2. Procédé selon la revendication 1, selon lequel la matrice bidimensionnelle est associée à des axes orthogonaux, et selon lequel, la chaîne de traitement a une première forme, appelée première chaîne, dans laquelle :

   la première image transformée (11A) est obtenue par une transformation linéaire incluant un filtrage passe-bande isotrope (121A) avec un noyau (σ) de l'ordre de la dimension des objets à détecter,
   la seconde image transformée est obtenue par une transformation linéaire incluant un filtrage passe-bande isotrope (221A) avec un noyau (σ) de l'ordre de la dimension des objets diffus.

3. Procédé selon la revendication 1, selon lequel la matrice bidimensionnelle est associée à des axes orthogonaux, et selon lequel, la chaîne de traitement a une seconde forme, appelée seconde chaîne, dans laquelle :

   la première image transformée est obtenue par une transformation non-linéaire incluant un filtrage passe-bande isotrope (121B) avec un noyau de dimension de l'ordre du pixel, suivi d'un filtrage passe-bas isotrope (124B) avec un noyau de l'ordre de la dimension des objets à détecter,
   la seconde image transformée est obtenue par un filtrage non-linéaire incluant un filtrage passe-bande isotrope (221B) avec un noyau de dimension de l'ordre du pixel, suivi d'un filtrage passe-bas isotrope (224B) avec un noyau (σ) de l'ordre de la dimension des objets diffus.

4. Procédé de traitement d'image selon la revendication 2, comprenant, outre la première chaîne de traitement, une deuxième forme de la chaîne de traitement appelée seconde chaîne dans laquelle :

   la première image transformée est obtenue par un filtrage non-linéaire incluant un filtrage passe-bande isotrope (121B) avec un noyau de dimension de l'ordre du pixel, suivi d'un filtrage passe-bas isotrope (124B) avec un noyau de l'ordre de la dimension des objets à détecter,
   la seconde image transformée est obtenue par un filtrage non-linéaire incluant un filtrage passe-bande isotrope (221B) avec un noyau de dimension de l'ordre du pixel, suivi d'un filtrage passe-bas isotrope (224B) avec un noyau (σ) de l'ordre de la dimension des objets diffus.

5. Procédé selon la revendication 4, selon lequel, dans l'une et l'autre des chaînes individuellement:

   la détermination des optima locaux inclut la formation, à partir de la première image transformée (11A,11B), d'une première image des gradients d'intensité (12A,12B), obtenue par un filtrage passe-bande (131A,131B) orienté selon lesdits axes de la matrice bidimensionnelle, suivi d'un "lâché de billes fictives", à raison d'une par pixel, forcées à suivre les pentes de la première image des gradients pour déterminer (132A,132B) les points de convergence des pentes comme optima locaux,
   la détermination des régions homogènes inclut la formation, à partir de la seconde image transformée, d'une seconde image des gradients d'intensité obtenue par un filtrage passe-bande (231A,231B) orienté selon lesdits axes de la matrice bidimensionnelle, suivi d'un "lâché de billes fictives", à raison d'une par pixel, forcées à suivre les pentes de la seconde image des gradients pour déterminer (232A,232B) les points de convergence des pentes, d'un comptage (233A,233B) des billes fictives convergeant vers chacun de ces points pour déterminer l'étendue en nombre de pixels des régions correspondantes, et la détermination (234A, 234B) des pixels adjacents appartenant à des régions différentes comme frontières de ces régions appelées régions homogènes.

6. Procédé selon la revendication 5, selon lequel, les listes d'objets détectés formées à partir de la sélection des optima dans les première et seconde chaînes sont appelées respectivement liste de la première chaîne (LIST3A) et liste de la seconde chaîne (LIST3B), ce procédé comprenant en outre une étape d'union (104) de la liste de la première chaîne et de la liste de la seconde chaîne (A-UNION-B), constituant une meilleure liste des objets détectés.

7. Procédé selon l'une des revendications 4 à 6, selon lequel, dans la première chaîne,

pour fournir la première image transformée (11A), le filtrage passe-bande isotrope (121A) est effectué par un filtrage bidimensionnel récursif à noyau de Laplacien de largeur $\sigma=7$ pixels,
pour fournir la seconde image transformée le filtrage passe-bande isotrope (221A) est effectué par un filtrage bidimensionnel récursif à noyau de Laplacien de largeur $\sigma=15$ pixels,

et selon lequel, dans la deuxième chaîne,

pour fournir la première image transformée, le filtrage passe-bande isotrope (121B-123B) est effectué par un filtrage bidimensionnel récursif à noyau de Laplacien de largeur $\sigma=1$ pixel, et le filtrage passe-bas isotrope (124B) est effectué par un filtrage bidimensionnel récursif à noyau gaussien de largeur $\sigma=7$ pixels,
pour fournir la seconde image transformée, le filtrage passe-bande isotrope (221B,223B) est effectué par un filtrage bidimensionnel récursif à noyau de Laplacien de largeur $\sigma=1$ pixel, et le filtrage passe-bas isotrope (224B) est effectué par un filtrage bidimensionnel récursif à noyau gaussien de largeur $\sigma=15$ pixels.

8. Procédé selon l'une des revendications 4 à 7, selon lequel, dans l'une et l'autre chaîne,
pour fournir les premières et secondes images des gradients, le filtrage passe-bande orienté (131A,131B ; 231A,231B) est effectué par un filtrage à noyau gaussien passe-bas suivi d'un filtrage par un opérateur différentiel orienté d'ordre 1.

9. Procédé selon l'une des revendications 1 à 8, appliqué à une image acquise par transmission à travers une région d'un corps et comprenant une étape préliminaire de construction d'une ligne de démarcation entre une zone de l'image correspondant à une partie de la région du corps d'épaisseur substantiellement constante et une zone adjacente de l'image correspondant à une autre partie de la région du corps d'épaisseur non constante.

10. Procédé selon la revendication 9, selon lequel, dans l'étape de détermination des régions homogènes (230A, 230B), une région potentiellement homogène est divisée en deux régions homogènes lorsqu'elle est traversée par ladite ligne de démarcation, auxquelles est appliqué ensuite individuellement un placement (240A, 240B) des optima locaux.

11. Procédé selon l'une des revendications 9 ou 10, comprenant pour la construction de la ligne de démarcation entre les deux zones :

la construction (111) d'un histogramme du nombre de pixel (N) en fonction des niveaux d'intensité (G) de l'image d'origine (10A),
un lissage (112) de cet histogramme,
la construction (113) d'une image des gradients de l'histogramme,
la sélection (114) des gradients les plus grands sur l'image des gradients pour déterminer les maxima de pente de l'histogramme,
la sélection (115) du premier maximum (F) de pente rencontré parmi les maxima précédemment déterminés sur l'histogramme, en allant des régions de faible opacité vers les régions d'opacité croissante.

12. Procédé selon l'une des revendications 1 à 11 comprenant, dans les chaînes de traitement, la génération de marquages pour la mise en évidence, sur l'image d'origine, des objets détectés (12A,12B ; 14A,14B ; 15A,15B).

13. Procédé d'aide à la visualisation de masses biologiques suspectes, comprenant la formation d'une image d'une région interne du corps humain sous forme de matrice bidimensionnelle de pixels, ayant des intensités numérisées, le traitement de cette image au moyen des étapes selon l'une des revendications 1 à 12.

14. Dispositif d'aide à la visualisation d'images médicales comprenant:

un système pour fournir des données d'une image médicale d'une partie du corps humain, sous forme de matrice bidimensionnelle de pixels ayant des valeurs d'intensité numérisées,

un système d'affichage de l'image,

et un système de traitement incluant un processeur ayant accès aux données d'image et au système d'affichage pour mettre en oeuvre un procédé selon l'une des revendications 1 à 12.

FIG.1A

FIG.1B

FIG.2A

FIG.2B

FIG.2C

FIG.2D

FIG.2E

FIG.2F

FIG.3A

FIG.3B

FIG.3C

FIG.3D

FIG.3E

FIG.3F

FIG.4A

FIG.4B                    A-UNION-B

FIG.5A

FIG.5B

FIG.5C

FIG.5D

FIG. 6

FIG.8

FIG.7A

FIG.7B

FIG. 7C

FIG.7D

FIG.7E

FIG.7F

**Office européen des brevets**

## RAPPORT DE RECHERCHE EUROPEENNE

Numero de la demande

EP 96 20 1045

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 609 922 (PHILIPS ELECTRONICS N.V.)<br>* abrégé * | 1-14 | G06T7/00 |
| A | EP-A-0 627 695 (VISIT GMBH,PERSONAL DATACARD SYSTEMS)<br>* colonne 7, ligne 56 - colonne 8, ligne 10 * | 1-14 | |
| A | MEDICAL PHYSICS,<br>vol. 20, no. 6,<br>pages 1661-1666, XP000422126<br>NISHIKAWA R M ET AL: "COMPUTER-AIDED DETECTION OF CLUSTERED MICROCALCIFICATIONS: AN IMPROVED METHOD FOR GROUPING DETECTED SIGNALS"<br>* le document en entier * | 1-14 | |
| A | MEDICAL PHYSICS,<br>vol. 21, no. 7, NEW YORK US,<br>pages 1203-1211, XP000460229<br>HEANG-PING CHAN ET AL.: "Digitization requirements in mammography:Effects on computer-aided detection of microcalcifications"<br>* abrégé * | 1-14 | |
| A | IEEE TRANSACTIONS ON MEDICAL IMAGING,<br>vol. 9, no. 3, NEW YORK US,<br>pages 233-241, XP000159488<br>D. BRZAKOVIC ET AL.: "An approach to automated detection of tumors in mammograms"<br>* abrégé * | 1-14 | |

**DOMAINES TECHNIQUES RECHERCHES (Int.Cl.6)**

G06T

Le présent rapport a été établi pour toutes les revendications

| Lieu de la recherche | Date d'achèvement de la recherche | Examinateur |
|---|---|---|
| LA HAYE | 18 Juillet 1996 | Chateau, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)